# EUROPÄISCHE PATENTSCHRIFT

(11) **EP 4 635 685 B1**
(45) Veröffentlichungstag und Bekanntmachung des Hinweises auf die Patenterteilung: **22.07.2026**
(21) Anmeldenummer: 24170410.5
(22) Anmeldetag: 16.04.2024
(51) Int. Cl.: B25J 9/16, G05B 19/4061

(54) **VERFAHREN, SICHERHEITSEINRICHTUNG UND MASCHINENEINRICHTUNG ZUM SICHEREN BETRIEB EINER BEWEGLICHEN MASCHINE**
METHOD, SAFETY DEVICE AND MACHINE DEVICE FOR SAFELY OPERATING A MOVABLE MACHINE
PROCÉDÉ, DISPOSITIF DE SÉCURITÉ ET DISPOSITIF DE MACHINE POUR LE FONCTIONNEMENT SÉCURISÉ D'UNE MACHINE MOBILE

(43) Veröffentlichungstag der Anmeldung: 22.10.2025
(73) Patentinhaber: SICK AG, 79183 Waldkirch (DE)
(72) Erfinder: POKRANDT, Peter, 76474 Au am Rhein (DE); HAMMES, Markus, 79117 Freiburg (DE)
(74) Vertreter: Manitz Finsterwald Patent- und Rechtsanwaltspartnerschaft mbB

(56) Entgegenhaltungen:
- EP-A1- 1 835 306
- DE-A1- 102018 214 439
- US-B2- 10 445 944

## Beschreibung

Die Erfindung betrifft ein Verfahren zum sicheren Betrieb einer beweglichen Maschine, eine Sicherheitseinrichtung zum sicheren Betrieb einer beweglichen Maschine sowie eine Maschineneinrichtung zum sicheren Betrieb einer beweglichen Maschine, jeweils insbesondere im Rahmen einer Mensch-Roboter-Interaktion.

Vor allem im industriellen Umfeld werden Roboter oder vergleichbare bewegliche Maschinen dazu verwendet, bestimmte Aufgaben zu verrichten. Dies betrifft insbesondere Aufgaben, bei denen besonders große Kräfte ausgeübt werden müssen und/oder die mit hoher Geschwindigkeit und Präzision auszuführen sind, vor allem dann, wenn die jeweilige Aufgabe sehr oft auf dieselbe Weise durchzuführen ist. Es gibt aber auch Aufgaben, die sich von einem Menschen besser ausführen lassen als von einer Maschine. Dies betrifft insbesondere Aufgaben, die schwer zu automatisieren sind, etwa weil sie Erfahrung und/oder eine hohe Anpassungsfähigkeit voraussetzen. Bei Prozessen, die sowohl Arbeiten der einen Art als auch Arbeiten der anderen Art umfassen, kann es daher zweckmäßig sein, wenn Menschen und Maschinen zusammenarbeiten, um die jeweiligen Stärken möglichst effizient zu kombinieren.

Die Art der Zusammenarbeit kann dabei unterschiedlich ausfallen. Beispielsweise können sich die Arbeitsbereiche eines Roboters und eines Menschen lediglich überschneiden, wobei keine direkte Interaktion zwischen dem Roboter und dem Menschen stattfindet oder wobei eine Interaktion nur bei Stillstand des Roboters vorgesehen ist. Eine solche Form der Zusammenarbeit wird auch als Mensch-Roboter-Kooperation bezeichnet. Die Zusammenarbeit kann aber auch so weit gehen, dass eine direkte Interaktion bis hin zum planmäßigen Kontakt zwischen einem Menschen und einem Roboter erfolgt, etwa wenn der Mensch und der Roboter gleichzeitig an einem Werkstück arbeiten oder der Roboter handgeführt wird. Diese Art der Zusammenarbeit wird auch als Mensch-Roboter-Kollaboration bezeichnet. In Bezug auf die vorliegende Erfindung soll Mensch-Roboter-Interaktion in einem eher weiten Sinne zu verstehen sein und alle der genannten Formen der Zusammenarbeit, insbesondere sowohl Mensch-Roboter-Kollaboration als auch Mensch-Roboter-Kooperation, umfassen.

Durch eine Mensch-Roboter-Interaktion ergeben sich hohe Anforderungen hinsichtlich der Sicherheit der beteiligten Personen, da die jeweilige bewegliche Maschine insbesondere aufgrund ihrer Kraft und Geschwindigkeit eine Gefahr für Personen in ihrer unmittelbaren Umgebung darstellen kann. Eine Gefährdung für mit der beweglichen Maschine zusammenarbeitende Personen kann sich aber auch bei geringen Kräften oder Geschwindigkeiten ergeben, beispielsweise aufgrund von Teilen oder Strukturen der beweglichen Maschine, die per se gefährlich sind, etwa weil sie spitz, scharfkantig oder heiß sind. Wenn die bewegliche Maschine als ein Roboterarm ausgebildet ist, kann eine Gefährdung insbesondere von einem Werkzeug ausgehen, das am Roboterarm oder in einer Werkzeugaufnahme des Roboterarms, typischerweise an dessen freiem Ende, vorgesehen ist.

Es müssen daher Vorkehrungen getroffen werden, um eine Gefährdung von Personen nach Möglichkeit auszuschließen. Derartige Vorkehrungen umfassen sowohl passive Maßnahmen, beispielsweise dass harte oder scharfe Kanten an Außenseiten der beweglichen Maschine vermieden und eher weiche und/oder abgerundete Oberflächen vorgesehen werden, als auch aktive Sicherheitsmechanismen, die im Falle einer Gefahr für eine Person eine konkrete sicherheitsgerichtete Reaktion auslösen, um diese Gefahr abzuwenden.

Wenn im Rahmen einer Mensch-Roboter-Interaktion Roboter oder vergleichbare bewegliche Maschinen, wie etwa AGVs (Automated Guided Vehicle), AGCs (Automated Guided Container) oder Drohnen, in einer definierten Arbeitsumgebung mit Personen zusammenarbeiten, ohne dabei durch eine gegenständliche Trennvorrichtung (wie etwa eine Wand) räumlich voneinander getrennt zu sein, kann sich eine Gefahr für eine beteiligte Person insbesondere dadurch ergeben, dass es zu einer Kollision zwischen der beweglichen Maschine und der Person kommt. Dieser Gefahr kann auf verschiedene Weisen begegnet werden.

Eine Möglichkeit besteht darin, dass die bewegliche Maschine nur unter direkter Kontrolle eines Menschen betrieben wird, der somit selbst sicherstellen kann, dass weder er noch andere Personen durch die Maschine gefährdet werden. Erfolgt die Ansteuerung der beweglichen Maschine hingegen automatisch oder arbeitet die bewegliche Maschine sogar autonom, kann die Sicherheit der mit der Maschine zusammenarbeitenden Personen gemäß einem weiteren Sicherungskonzept dadurch gewährleistet werden, dass die Bewegungen der Maschine, insbesondere ihre Kraft und Geschwindigkeit, grundsätzlich so limitiert werden, dass eine Schädigung beteiligter Personen im Falle einer Kollision von vornherein weitgehend ausgeschlossen werden kann. Außerdem kann gemäß einem alternativen Sicherungskonzept vorgesehen sein, dass die bewegliche Maschine überhaupt nur dann in Betrieb gesetzt werden kann, wenn sich kein Mensch in einer definierten Umgebung der beweglichen Maschine befindet, und unverzüglich angehalten wird, sobald ein Mensch in die definierte Umgebung eindringt.

Derartige Sicherungskonzepte können für dynamische Applikationen, in denen hohe Prozessgeschwindigkeiten angestrebt werden, jedoch zu einschränkend sein. Aus diesem Grund kommt oftmals ein als Speed-and-Separation-Monitoring bezeichnetes Sicherungskonzept zum Einsatz, bei dem die Geschwindigkeit der beweglichen Maschine desto stärker reduziert wird, je geringer der Abstand der beweglichen Maschine zu Personen in ihrer Umgebung wird. Auf diese Weise kann bei einer Annäherung einer Person an die bewegliche Maschine zunächst nur ein Ausweichen oder Verlangsamen der Maschinenbewegung erfolgen; ein vollständiger Stopp der beweglichen Maschine ist dagegen nur für den Fall sehr kurzer Abstände vorgesehen.

Das Speed-and-Separation-Monitoring setzt eine sehr dynamische Kontrolle der beweglichen Maschine und eine genaue Überwachung des Umfelds der beweglichen Maschine voraus. Die Überwachung kann insbesondere schutzfeldbasiert erfolgen. Das heißt, dass ein oder mehrere Schutzfelder definiert werden, bei denen es sich jeweils um einen definierten Raumbereich innerhalb der Umgebung der beweglichen Maschine handelt, der mittels einer Sensorvorrichtung überwacht wird. Die von der Sensorvorrichtung erfassten Daten können dann im Hinblick darauf ausgewertet werden, ob irgendein Objekt (z. B. eine mit der beweglichen Maschine zusammenarbeitende Person) in das jeweilige Schutzfeld eingreift, so dass gegebenenfalls eine geeignete sicherheitsgerichtete Reaktion ausgelöst werden kann. Dabei können sich die Schutzfelder jeweils um die bewegliche Maschine herum erstrecken. Verschiedene Schutzfelder können die bewegliche Maschine in verschiedenen Abständen von der beweglichen Maschine umgeben, so dass gestaffelt je nach Schutzfeld, in das eingegriffen wird, unterschiedliche sicherheitsgerichtete Reaktionen (Ausweichen, Abbremsen, Stoppen) ausgelöst werden können. Zweckmäßigerweise führt ein Eingriff in das der beweglichen Maschine nächste Schutzfeld zu einem Nothalt der Maschine.

Für Industrieanwendungen mit signifikantem Gefährdungspotential müssen diese Funktionen nach den Regeln der funktionalen Sicherheit mit einem hohen Sicherheitsniveau realisiert werden. Maßgeblich sind dabei insbesondere die Grundnorm IEC 61508:2010 und die C-Norm für Roboterabsicherungen EN ISO 10218:2011, die Normen DIN EN ISO 13849-1:2023-12 und DIN EN ISO 13849-2:2013-02 für Maschinensicherheit sowie die Gerätenormen DIN EN IEC 61496-1:2021-06, DIN EN IEC 61496-2:2021-08 und DIN EN IEC 61496-3:2019-10 für berührungslos wirkende Schutzeinrichtungen (BSW). Die Bezeichnung einer Funktion, einer Vorrichtung oder eines Verfahrensschritts als sicher ist hier im Sinne dieser Normen zu verstehen. Um diese Normen zu erfüllen, sind eine Reihe von Maßnahmen zu treffen, die insbesondere eine sichere elektronische Auswertung durch redundante und diversitäre Elektronik sowie verschiedene Funktionsüberwachungen, darunter die Überwachung der Verschmutzung optischer Bauteile einschließlich ihrer jeweiligen Frontscheibe, umfassen.

Die beschriebene Schutzfeldfunktion kann weitgehend vollständig innerhalb einer zertifizierten Sensorvorrichtung verwirklicht werden. Dabei kann einer jeweiligen Sensorvorrichtung ein zu überwachendes Schutzfeld - beispielsweise durch einen Einlernvorgang oder als dreidimensionale, etwa mittels CAD definierte, Raumdaten - vorgegeben und auch validiert werden. Die Überwachung des Schutzfelds findet dann ebenso in der Sensorvorrichtung statt wie die basierend auf den erfassten Daten getroffene sicherheitstechnische Entscheidung über das Auslösen einer sicherheitsgerichteten Reaktion. Das von der Sensorvorrichtung ausgegebene Signal kann dann im Wesentlichen das bloße Ergebnis der sicherheitstechnischen Entscheidung umfassen und insofern binär sein: Bei negativem Signal erfolgt keine Reaktion, bei positivem Signal erfolgt ein Nothalt der beweglichen Maschine. In dieser einfachen Form ist die Sicherheitsfunktion leicht konfigurierbar und erlaubt eine Absicherung auf Komponentenebene.

Allerdings ist eine solche schutzfeldbasierte Absicherung unflexibel. Denn die Konfiguration (insbesondere das Definieren des jeweiligen Schutzfelds) erfolgt zum Zeitpunkt der Einrichtung der Applikation auf Basis geplanter oder zu erwartender Bewegungsabläufe und Worst-Case-Betrachtungen. Es werden aber keine dynamischen Informationen über den jeweils aktuellen Arbeits- und Bewegungszustand der beweglichen Maschine berücksichtigt. Es kann daher auch nicht dynamisch auf neue Situationen reagiert werden, in denen beispielsweise vorrübergehend Eingriffe in bestimmte Bereiche des vorgegebenen Schutzfelds ungefährlich wären und das Auslösen des Nothalts somit unnötig wäre. Das geht zulasten der produktiven Abläufe.

Eine dynamische Anpassung des jeweiligen Schutzfelds an verschiedene Zustände der beweglichen Maschine müsste jedoch wiederum die Voraussetzungen für einen normgerechten sicheren Betrieb erfüllen und kann daher nicht ohne Weiteres innerhalb der Sensorvorrichtung realisiert werden.

Die Patentanmeldung US10445944B2 offenbart ein Verfahren zum Verwalten von Sicherheitszonen für industrielle Maschinen. Die Patentanmeldung DE102018214439A1 offenbart ein Verfahren zur Absicherung eines Arbeitsbereichs eines Roboters während einer Benutzungsphase.

Es ist eine Aufgabe der Erfindung, einen sicheren schutzfeldbasierten Betrieb einer beweglichen Maschine zu ermöglichen, bei dem das jeweilige Schutzfeld in Realzeit dynamisch an den jeweils aktuellen Zustand der beweglichen Maschine angepasst werden kann und der zugleich ein hohes Sicherheitsniveau aufweist.

Die Aufgabe wird gelöst durch ein Verfahren mit den Merkmalen des Anspruchs 1, durch eine Sicherheitseinrichtung mit den Merkmalen des Anspruchs 11 sowie durch eine Maschineneinrichtung mit den Merkmalen des Anspruchs 14. Vorteilhafte Ausführungsformen ergeben sich aus den Unteransprüchen, der vorliegenden Beschreibung sowie den Figuren.

Das erfindungsgemäße Verfahren zum sicheren Betrieb einer beweglichen Maschine umfasst: dass die bewegliche Maschine von einer Steuereinheit gesteuert wird; dass eine Sensorvorrichtung eine 3D-Repräsentation einer Umgebung der beweglichen Maschine ermittelt; dass ein initiales Schutzfeld vorgegeben wird, bei dem es sich um einen definierten Raumbereich innerhalb der Umgebung der beweglichen Maschine handelt; dass eine erste Anpassungsvorrichtung und eine zweite Anpassungsvorrichtung von der Steuereinheit Zustandsdaten über die bewegliche Maschine empfangen, wobei die erste Anpassungsvorrichtung ausgehend von dem initialen Schutzfeld in Abhängigkeit von den Zustandsdaten ein erstes angepasstes Schutzfeld ermittelt und die zweite Anpassungsvorrichtung ausgehend von dem initialen Schutzfeld in Abhängigkeit von den Zustandsdaten ein zweites angepasstes Schutzfeld ermittelt; dass auf Grundlage sowohl des ersten angepassten Schutzfelds als auch des zweiten angepassten Schutzfelds ein maßgebliches Schutzfeld ermittelt wird; dass eine Auswertevorrichtung die ermittelte 3D-Repräsentation im Hinblick darauf auswertet, ob ein Objekt in das maßgebliche Schutzfeld eingreift, und in Abhängigkeit von dem Ergebnis der Auswertung ein Ergebnissignal ausgibt; und dass die Steuereinheit eine sicherheitsgerichtete Reaktion auslöst, wenn das Ergebnissignal einem Eingreifen eines Objekts in das maßgebliche Schutzfeld entspricht.

Das Verfahren trägt dazu bei, die bewegliche Maschine auf eine Weise zu betreiben, die im Sinne der genannten Normen sicher ist. Die bewegliche Maschine wird dabei mittels der genannten Steuereinheit angesteuert, insbesondere dazu, gewisse Bewegungen und/oder Arbeiten auszuführen. Dabei nimmt die bewegliche Maschine verschiedene Zustände ein, die sich beispielsweise hinsichtlich der jeweiligen Position, der jeweiligen Bewegung und/oder des jeweiligen Betriebsmodus (zum Beispiel: Werkzeug aktiv/inaktiv) der beweglichen Maschine unterscheiden können.

Mittels der Sensorvorrichtung kann dabei während des Betriebs der beweglichen Maschine, vorzugsweise fortlaufend, eine Umgebung der beweglichen Maschine überwacht werden, indem die räumliche Struktur der Umgebung (einschließlich möglicherweise in der Umgebung befindlicher Objekte) erfasst wird. Das genannte Ermitteln der 3D-Repräsentation der Umgebung kann daher meinen, dass mittels der Sensorvorrichtung Positionsdaten (räumliche Information) über die Umgebung erfasst werden und basierend auf den erfassten Positionsdaten eine 3D-Repräsentation der Umgebung ermittelt wird. Die Positionsdaten bzw. die 3D-Repräsentation umfassen dabei zwangsläufig auch räumliche Information über Objekte, die sich innerhalb der Umgebung der beweglichen Maschine befinden. Grundsätzlich ist es dabei denkbar, die Objekte voneinander zu unterscheiden, etwa indem innerhalb der erfassten Positionsdaten über die Umgebung bzw. innerhalb der ermitteln 3D-Repräsentation der Umgebung durch Segmentierung oder Clustering voneinander separate räumliche Strukturen identifiziert werden. Vorteilhafterweise ist eine solche Unterscheidung separater Objekte für das erfindungsgemäße Verfahren jedoch gar nicht erforderlich.

Grundsätzlich können anhand der erfassten räumlichen Information auch Änderungen, also Bewegungen, erfasst werden und in die Positionsdaten bzw. in die 3D-Repräsentation einfließen. Um Eingriffe in jeweilige Schutzfelder zu detektieren, kann es aber ausreichen, wenn jeweils nur der aktuell vorliegende Zustand der Umgebung der beweglichen Maschine berücksichtigt wird.

Die Sensorvorrichtung kann einen oder mehrere Sensoren umfassen. Mehrere Sensoren können zweckmäßig sein, um die Umgebung der beweglichen Maschine aus verschiedenen Richtungen zu überwachen. Auf diese Weise können verdeckte Bereiche vermieden werden. Außerdem kann es für ein redundantes und diversitäres Ermitteln der 3D-Repräsentation zweckmäßig sein, mehrere Sensoren zu verwenden, die auf unterschiedlichen Messtechniken beruhen.

Die 3D-Repräsentation kann insbesondere in Form einer zweidimensionalen Tiefenkarte ermittelt werden. Dabei handelt es sich um ein zweidimensionales Bild eines erfassten dreidimensionalen Raumbereichs aus Sicht des jeweiligen Sensors der Sensorvorrichtung, wobei jeder Bildpunkt des Bildes anders als bei einer üblichen Abbildung den unter dem entsprechenden Blickwinkel sichtbaren Punkt der Umgebung nicht bildlich repräsentiert, sondern den Abstand dieses Punktes vom Sensor angibt. Es sind verschiedenartige, insbesondere optische, Sensoren bekannt, mit denen derartige Tiefenkarten erzeugt werden können. Solche Sensoren können beispielsweise auf Stereoskopie, Triangulation, einer Messung der Lichtlaufzeit (Time-of-Flight), einer Störung passiver zweidimensionaler Muster oder der Auswertung projizierter Beleuchtungsmuster beruhen. Insbesondere kann die Sensorvorrichtung zumindest einen Sicherheitsscanner umfassen, wie er in EP 2 395 372 A1 beschrieben wird, und/oder einen optoelektronischen Sensor umfassen, wie er in EP 2 048 557 A1 beschrieben wird.

Innerhalb der genannten Umgebung der beweglichen Maschine können dann ein oder mehrere Raumbereiche als jeweilige Schutzfelder definiert werden, durch die gewährleistet werden soll, dass eine Annäherung eines Objekts (einer Person) an die bewegliche Maschine erfasst und in sicherheitsgerichteter Weise darauf reagiert werden kann. Dazu sind die Schutzfelder zweckmäßigerweise zwischen der beweglichen Maschine und dem Aufenthaltsbereich von Personen angeordnet, insbesondere können die Schutzfelder die bewegliche Maschine zumindest im Wesentlichen - als eine Art schützender Mantel - umgeben. Wenn mehrere Schutzfelder vorgesehen sind, können diese in unterschiedlichem Abstand von der beweglichen Maschine angeordnet sein, so dass je nachdem, in welches Schutzfeld eingegriffen wird, eine entsprechende (mit abnehmendem Abstand immer weitergehende) sicherheitsgerichtete Reaktion ausgelöst werden kann. Im Folgenden wird jeweils nur ein einzelnes der gegebenenfalls mehreren Schutzfelder betrachtet. Das beschriebene Verfahren kann sich auf das eine Schutzfeld beschränken; es ist aber auch denkbar, dass das Verfahren parallel für mehrere Schutzfelder angewandt wird.

Ein jeweiliges Schutzfeld wird vorzugsweise durch einen kontinuierlichen Raumbereich gebildet. Grundsätzlich kann ein Schutzfeld aber auch zwei oder mehr voneinander separate und beabstandete Raumbereiche umfassen.

Das definierte Schutzfeld stellt dabei insofern ein initiales Schutzfeld dar, als es im Rahmen einer Konfiguration, die zweckmäßigerweise vor dem Betrieb der beweglichen Maschine durchgeführt wird, definiert und dann dem weiteren Verfahren vorgegeben wird. Zu diesem Zweck kann beispielsweise eine Konfigurationseinrichtung verwendet werden, wie sie in EP 2 048 557 A1 beschrieben wird. Alternativ oder ergänzend dazu kann das initiale Schutzfeld auch in einem CAD-ähnlichen Programm mit grafischer Benutzeroberfläche relativ zu einem Modell oder Bild der Umgebung der beweglichen Maschine definiert werden. Die Konfiguration des initialen Schutzfelds ist - gerade weil sie sicherheitsrelevant ist - vergleichsweise aufwendig, zumal das Schutzfeld, nachdem es definiert worden ist, in der Regel noch validiert werden muss. Die Konfiguration wird daher im Normalfall erst dann erneut durchgeführt, wenn die bewegliche Maschine für eine neue Applikation eingerichtet wird. Das initiale Schutzfeld ist insofern statisch.

Zweckmäßigerweise wird das initiale Schutzfeld im Sinne einer Worst-Case-Betrachtung so definiert, dass es in jedem Arbeits-, Positions- und Bewegungs-Zustand der beweglichen Maschine eine Art virtuellen Schutzwall hinreichender Dicke um die bewegliche Maschine herum bildet. Insbesondere ist das initiale Schutzfeld so angeordnet, dass die bewegliche Maschine in keiner Position, die sie einnehmen kann, in das Schutzfeld eingreift und weist eine so große Dicke auf, dass auch im potenziell gefährlichsten Betriebszustand der beweglichen Maschine (etwa bei hoher Bewegungsgeschwindigkeit oder aktivem Werkzeug) eine Annäherung an die bewegliche Maschine so rechtzeitig erfasst werden kann, dass durch Auslösen einer geeigneten sicherheitsgerichteten Reaktion eine Gefährdung vermieden werden kann.

Je nach aktuellem Zustand der beweglichen Maschine könnte aber in vielen Fällen eine ausreichende Sicherheit zumindest vorübergehend auch durch ein Schutzfeld erreicht werden, das zumindest bereichsweise eine geringere Dicke aufweist oder näher an der beweglichen Maschine angeordnet ist als das allgemein für alle möglichen Zustände definierte initiale Schutzfeld. Beispielsweise könnte sich das Schutzfeld im Stillstand der beweglichen Maschine im Wesentlichen an die bewegliche Maschine anschmiegen und/oder bei inaktivem Werkzeug eine geringere Dicke aufweisen als bei aktivem Werkzeug.

Aus diesem Grund wird erfindungsgemäß als das maßgebliche Schutzfeld für die Überwachung der Umgebung der beweglichen Maschine im Hinblick auf eine potenziell gefährliche Annäherung eines Objekts (einer Person) an die bewegliche Maschine nicht das initiale Schutzfeld unmittelbar herangezogen, sondern das maßgebliche Schutzfeld wird auf Grundlage sowohl eines ersten angepassten Schutzfelds als auch eines zweiten angepassten Schutzfelds ermittelt. Für diese angepassten Schutzfelder wird zwar jeweils von dem initialen Schutzfeld ausgegangen, anders als das initiale Schutzfeld werden die angepassten Schutzfelder aber in Abhängigkeit von Zustandsdaten über die bewegliche Maschine ermittelt, d. h. von Daten, die den gemäß der Ansteuerung durch die Steuereinheit aktuell vorgegebenen oder eingenommenen Zustand (Sollzustand oder Istzustand) der beweglichen Maschine beschreiben. Der Zustand kann sich dabei insbesondere auf die aktuelle Position, die aktuelle Bewegung und/oder den aktuellen Betriebsmodus der beweglichen Maschine beziehen.

Durch die Berücksichtigung dieser Zustandsdaten handelt es sich bei dem ersten angepassten Schutzfeld und dem zweiten angepassten Schutzfeld um dynamische Schutzfelder, durch die eine höhere Flexibilität beim Zusammenarbeiten von Personen mit der beweglichen Maschine erreicht werden kann als durch das statische initiale Schutzfeld. Allerdings erfolgt das Ermitteln dieser dynamischen Schutzfelder außerhalb der sicher ausgebildeten (vorzugweise als sicher zertifizierten) Sensorvorrichtung und muss aufgrund des laufenden Betriebs der beweglichen Maschine ohne manuelle Validierung durch einen Anwender auskommen. Insbesondere ist es bevorzugt, dass das Ermitteln der angepassten Schutzfelder vollständig ohne Mitwirkung durch einen Anwender automatisch erfolgt. Es muss daher auf andere Weise sichergestellt werden, dass die Anpassung des Schutzfelds sicher durchgeführt wird. Dies wird entsprechend den genannten Normen einerseits durch Redundanz und andererseits durch Diversität erreicht.

Die Redundanz ergibt sich daraus, dass nicht nur ein angepasstes Schutzfeld ermittelt wird, sondern ein erstes angepasstes Schutzfeld und ein zweites angepasstes Schutzfeld ermittelt werden. Die Diversität wird dadurch erreicht, dass für das Ermitteln der angepassten Schutzfelder eine erste Anpassungsvorrichtung und eine zweite Anpassungsvorrichtung verwendet werden, die vorzugsweise voneinander unabhängig sind. Das kann umfassen, dass die erste Anpassungsvorrichtung und die zweite Anpassungsvorrichtung separat voneinander ausgebildet sind.

So können die beiden Anpassungsvorrichtungen etwa jeweils eine eigene Recheneinheit aufweisen, die beispielsweise einen integrierten Schaltkreis (IC), einen Mikroprozessor, eine zentrale Recheneinheit (CPU), eine Grafikprozessoreinheit (GPU), eine Anwendungsspezifische Integrierte Schaltung (ASIC) und/oder ein Field Programmable Gate Array (FPGA) umfasst oder zumindest im Wesentlichen dadurch gebildet ist. Die beiden Anpassungsvorrichtungen können sich dann hinsichtlich der Art der Recheneinheit voneinander unterscheiden. Gemäß einer vorteilhaften Ausführungsform ist alternativ oder zusätzlich dazu vorgesehen, dass das erste angepasste Schutzfeld von der ersten Anpassungsvorrichtung gemäß einem ersten Algorithmus ermittelt wird und das zweite angepasste Schutzfeld von der zweiten Anpassungsvorrichtung gemäß einem von dem ersten Algorithmus verschiedenen, insbesondere unabhängigen, zweiten Algorithmus ermittelt wird, wobei die verschiedenen Algorithmen zweckmäßigerweise derart ausgelegt sind, dass sie für dieselben Eingangswerte zu demselben Ergebnis führen.

Aufgrund des diversitären Ermittelns der beiden angepassten Schutzfelder validieren sich diese sozusagen gegenseitig, da es unwahrscheinlich ist, dass zwei auf unterschiedliche Weise ermittelte angepasste Schutzfelder übereinstimmen, wenn beim Ermitteln eines der beiden Schutzfelder (oder beider) ein Fehler vorliegt.

Die angepassten Schutzfelder können jeweils beispielsweise dadurch ermittelt werden, dass das initiale Schutzfeld in Abhängigkeit von den Zustandsdaten modifiziert wird. Dabei ist es denkbar, dass das es je nach den empfangenen Zustandsdaten dazu kommt, dass die angepassten Schutzfelder zu dem initialen Schutzfeld identisch sind. Beispielsweise können die angepassten Schutzfelder dem initialen Schutzfeld unmittelbar entsprechen, solange die bewegliche Maschine eine bestimmte Geschwindigkeit überschreitet, eine bestimmte Bewegungsbahn durchläuft und/oder in einem bestimmten Betriebsmodus betrieben wird. Vorzugsweise unterscheiden sich die angepassten Schutzfelder aber zumindest in einigen Zuständen der beweglichen Maschine von dem initialen Schutzfeld.

Grundsätzlich kommen für das Ermitteln der angepassten Schutzfelder verschiedene Algorithmen oder sonstige Verfahren in Betracht, die für sich bekannt sein können. Für die vorliegende Erfindung kommt es dabei nicht darauf an, auf welche konkrete Weise das erste angepasste Schutzfeld und das zweite angepasste Schutzfeld ermittelt werden. Wesentlich ist jedoch, dass in das Ermitteln der angepassten Schutzfelder die Zustandsdaten einfließen. Diese Zustandsdaten empfangen die beiden Anpassungsvorrichtungen jeweils von der Steuereinheit. Beide Anpassungsvorrichtungen empfangen von der Steuereinheit jeweils dieselben Zustandsdaten. Sie können die Zustandsdaten dabei direkt oder indirekt von der Steuereinheit empfangen und können dazu mit der Steuereinheit direkt oder indirekt, vorzugsweise kabelgebunden, grundsätzlich aber auch kabellos, verbunden sein.

Wenn im Rahmen eines sicheren Verfahrens eine Größe redundant und diversitär ermittelt wird, so dass im Ergebnis zwei auf unterschiedliche Weise ermittelte Größen vorliegen, von denen zu erwarten ist, dass sie übereinstimmen, ist es üblich, die Größen anschließend miteinander zu vergleichen und bei (hinreichender) Übereinstimmung eine der beiden Größen weiterzuverwenden, bei einer (signifikanten) Abweichung hingegen beide Größen als inkonsistent zu verwerfen. Für das vorliegende Verfahren würde das bedeuten, dass die beiden angepassten Schutzfelder verglichen werden müssten und bei einer festgestellten Inkonsistenz aus Gründen der Sicherheit nicht nur beide verworfen werden müssten, sondern auch ein sicherheitsgerichtetes Abschalten (Nothalt) der beweglichen Maschine ausgelöst werden müsste. Die Prüfung der beiden Schutzfelder auf hinreichende Konsistenz kann jedoch rechnerisch relativ aufwendig sein. Zudem kann es sein, dass die festgestellte Inkonsistenz in der aktuellen Situation für die Sicherheit irrelevant ist, da die Situation de facto ungefährlich ist, so dass das sicherheitsgerichtete Abschalten nicht erforderlich wäre.

Aus diesem Grund erfolgt bei dem erfindungsgemäßen Verfahren vorzugsweise kein Vergleich des ersten angepassten Schutzfelds mit dem zweiten angepassten Schutzfeld und wird das maßgebliche Schutzfeld auch nicht einfach mit einem der beiden angepassten Schutzfelder gleichgesetzt, sondern wird das maßgebliche Schutzfeld auf Grundlage sowohl des ersten angepassten Schutzfelds als auch des zweiten angepassten Schutzfelds ermittelt. Das bedeutet, dass sowohl das erste angepasste Schutzfeld als auch das zweite angepasste Schutzfeld in das maßgebliche Schutzfeld konkret einfließen. Beispielsweise kann das Ermitteln des maßgeblichen Schutzfelds umfassen, dass Teile des maßgeblichen Schutzfelds unmittelbar von dem ersten angepassten Schutzfeld übernommen werden, während andere (die übrigen) Teile des maßgeblichen Schutzfelds unmittelbar aus dem zweiten angepassten Schutzfeld übernommen werden, so dass das maßgebliche Schutzfeld zu einem Teil dem ersten angepassten Schutzfeld entspricht und zu einem anderen Teil dem zweiten angepassten Schutzfeld entspricht.

Durch eine derartige kombinierte Berücksichtigung beider angepasster Schutzfelder in dem maßgeblichen Schutzfeld kann das maßgebliche Schutzfeld insgesamt eine zuverlässige Grundlage für einen fehlersicheren Betrieb der beweglichen Maschine sein. Zugleich kann einerseits ein aufwendiger Quervergleich zwischen den angepassten Schutzfeldern vermieden werden und andererseits vermieden werden, dass die bewegliche Maschine sicherheitshalber abgeschaltet wird, obwohl dies trotz einer möglichen Inkonsistenz der angepassten Schutzfelder nicht zwingend erforderlich wäre.

Das Ermitteln des maßgeblichen Schutzfeld es erfolgt vorzugsweise automatisch, insbesondere ohne manuelle Eingaben oder von einem Anwender ausgelöst werden zu müssen. Das maßgebliche Schutzfeld kann während des Betriebs der beweglichen Maschine fortlaufend neu ermittelt werden. Insbesondere kann immer dann ein neues maßgebliches Schutzfeld ermittelt werden, wenn die erste Anpassungsvorrichtung und die zweite Anpassungsvorrichtung ein neues erstes angepasstes Schutzfeld bzw. ein neues zweites angepasstes Schutzfeld basierend auf den jeweils aktuellen von der Sensorvorrichtung empfangenen Zustandsdaten ermitteln. Insbesondere kann vorgesehen sein, dass neue angepasste Schutzfelder (nur) jeweils dann ermittelt werden, wenn sich die Zustandsdaten signifikant verändert haben (beispielsweise aufgrund einer Änderung der Position oder Bewegung der beweglichen Maschine über ein vorgegebenes Maß hinaus oder aufgrund einer Änderung des Betriebsmodus der beweglichen Maschine).

Für das Ermitteln des maßgeblichen Schutzfelds kann eine eigene Schutzfeldermittlungsvorrichtung vorgesehen sein, die die angepassten Schutzfelder von den Anpassungsvorrichtungen empfängt und das maßgebliche Schutzfeld an die Auswertevorrichtung ausgibt. Vorzugsweise wird das maßgebliche Schutzfeld allerdings durch die Auswertevorrichtung ermittelt, die hierzu das erste angepasste Schutzfeld und das zweite angepasste Schutzfeld von den Anpassungsvorrichtungen empfängt.

Die Auswertevorrichtung ist vorzugsweise in die Sensorvorrichtung integriert. Grundsätzlich kann die Auswertevorrichtung jedoch auch als eine von der Sensorvorrichtung (und den Anpassungsvorrichtungen) separate Vorrichtung ausgebildet sein.

Die Auswertevorrichtung kann die von der Sensorvorrichtung ermittelte 3D-Repräsentation von der Sensorvorrichtung direkt oder indirekt empfangen und dazu mit der Sensorvorrichtung direkt oder indirekt, vorzugweise kabelgebunden, grundsätzlich aber auch kabellos, verbunden sein. Die ermittelte 3D-Repräsentation wird von der Auswertevorrichtung dann im Hinblick darauf ausgewertet, ob ein (beliebiges) Objekt in das maßgebliche Schutzfeld eingreift. Das ist dann der Fall, wenn sich irgendeine von der 3D-Repräsentation umfasste räumliche Struktur zumindest teilweise innerhalb des Schutzfelds befindet.

In Abhängigkeit von dem Ergebnis der genannten Auswertung gibt die Auswertevorrichtung schließlich ein Ergebnissignal aus. Insbesondere kann das Ergebnissignal unmittelbar dem Ergebnis der Auswertung entsprechen. Je nachdem entspricht das Ergebnissignal also entweder einem Eingreifen eines Objekts in das Schutzfeld oder keinem Eingreifen eines Objekts in das Schutzfeld. Insofern handelt es sich bei dem Ergebnissignal um ein binäres Signal. Dabei kann es ausreichen, wenn nur im Falle eines der beiden Ergebnisse ein konkretes Signal ausgegeben wird (positives Ergebnissignal), während zur Signalisierung des anderen Falls kein Signal ausgegeben wird (negatives Ergebnissignal). Insbesondere kann vorgesehen sein, dass als Ergebnissignal so lange ein konkretes Signal ausgegeben wird, wie die Auswertung zu dem Ergebnis führt, dass kein Eingriff in das maßgebliche Schutzfeld vorliegt, wohingegen ein Eingriff in das Schutzfeld durch das Ausbleiben dieses konkreten Signals signalisiert wird. Auf diese Weise führt ein Ausfall der Auswertevorrichtung oder eine Störung der Signalübertragung vorteilhafterweise genauso wie ein Eingriff in das Schutzfeld zu einer sicherheitsgerichteten Reaktion.

Empfangen wird das von der Auswertevorrichtung ausgegebene Ergebnissignal (direkt oder indirekt) von der Steuereinheit, die dann, wenn das Ergebnissignal einem Eingreifen eines Objekts in das maßgebliche Schutzfeld entspricht, eine sicherheitsgerichtete Reaktion auslöst. Die sicherheitsgerichtete Reaktion kann insbesondere zum Beispiel darin bestehen, dass die Steuereinheit die bewegliche Maschine dazu ansteuert, sich mit reduzierter Geschwindigkeit zu bewegen oder anzuhalten. Falls das maßgebliche Schutzfeld auf dem innersten von gegebenenfalls mehreren initialen Schutzfeldern basiert, besteht die sicherheitsgerichtete Reaktion vorzugweise in einem sicherheitsgerichteten Abschalten der beweglichen Maschine.

Vorzugsweise erfolgen die genannten Verfahrensschritte jeweils in Realzeit und erfordern insbesondere keine manuelle Validierung durch einen Anwender. Wenn das Verfahren fortlaufend durchgeführt wird, kann in späteren Iterationen des Verfahrens jeweils von einem zuvor ermittelten (insbesondere dem bei der vorangehenden Iteration ermittelten) maßgeblichen Schutzfeld als dem initialen Schutzfeld ausgegangen werden. Vorzugweise wird jedoch durchgehend von demselben initialen Schutzfeld ausgegangen.

Gemäß einer vorteilhaften Ausführungsform umfasst das Ermitteln des maßgeblichen Schutzfelds, dass das erste angepasste Schutzfeld und das zweite angepasste Schutzfeld räumlich überlagert werden. Die Überlagerung kann beispielsweise darin bestehen, dass das maßgebliche Schutzfeld durch eine Addition im Sinne einer räumlichen Vereinigung der beiden angepassten Schutzfelder gebildet wird. Alternativ dazu kann vorgesehen sein, dass das maßgebliche Schutzfeld teilweise dem ersten angepassten Schutzfeld entspricht und teilweise dem zweiten angepassten Schutzfeld entspricht, wobei die Verteilung vorteilhafterweise derart gewählt wird, dass eine homogene Mischung der beiden angepassten Schutzfelder erzielt wird. Die beiden angepassten Schutzfelder können durch die Überlagerung insbesondere räumlich verwoben sein.

Infolge der Überlagerung entspricht das maßgebliche Schutzfeld einer räumlichen Kombination des ersten angepassten Schutzfelds und des zweiten angepassten Schutzfelds miteinander, die es ermöglicht, dass stets beide angepassten Schutzfelder berücksichtigt werden. Ein Vergleich der beiden angepassten Schutzfelder kann dadurch ausbleiben und es muss auch keine Entscheidung zwischen den beiden angepassten Schutzfeldern getroffen werden. Sollte eines der angepassten Schutzfelder fehlerhaft sein, ist es unwahrscheinlich, dass zugleich das andere auch fehlerhaft ist. Die räumliche Überlagerung stellt dabei sicher, dass jedenfalls auch das nicht fehlerhafte angepasste Schutzfeld berücksichtigt wird, so dass auch bei einer möglichen Diskrepanz zwischen den angepassten Schutzfeldern keine Notwendigkeit für ein sicherheitsgerichtetes Abschalten beseht.

Gemäß einer weiteren vorteilhaften Ausführungsform wird das maßgebliche Schutzfeld in Form einer maßgeblichen Lookup-Tabelle ermittelt, wobei das genannte Auswerten (der ermittelten 3D-Repräsentation im Hinblick darauf, ob ein Objekt in das maßgebliche Schutzfeld eingreift) umfasst, dass die ermittelte 3D-Repräsentation mit der maßgeblichen Lookup-Tabelle verglichen wird. Die Bezeichnung der maßgeblichen Lookup-Tabelle als "maßgeblich" dient dabei nur der begrifflichen Unterscheidung von der ersten Lookup-Tabelle und der zweiten Lookup-Tabelle, die weiter unten noch beschrieben werden. Mit anderen Worten: Das maßgebliche Schutzfeld wird in Form einer Lookup-Tabelle ermittelt, die im Folgenden als maßgebliche Lookup Tabelle bezeichnet wird.

Bei der maßgeblichen Lookup-Tabelle kann es sich insbesondere um eine zweidimensionale Tabelle handeln, deren Werte einer dritten Dimension entsprechen. Vorzugsweise entspricht die maßgebliche Lookup-Tabelle dabei einer zweidimensionalen Tiefenkarte, wobei auch die ermittelte 3D-Repräsentation als zweidimensionale Tiefenkarte vorliegt, und wobei die maßgebliche Lookup-Tabelle und die ermittelte 3D-Repräsentation einander hinsichtlich ihrer Maße (Breite und Höhe bzw. Auflösung) entsprechen. (Dasselbe gilt vorzugsweise entsprechend für die erste und die zweite Lookup-Tabelle, die weiter unten beschrieben werden.)

Das Ermitteln des maßgeblichen Schutzfelds in Form einer maßgeblichen Lookup-Tabelle kann umfassen, dass zunächst das maßgebliche Schutzfeld als dreidimensionaler Raumbereich definiert wird und dieser dann in die maßgebliche Lookup-Tabelle umgewandelt wird, indem er, vorzugsweise unter Berücksichtigung optischer Parameter der Sensorvorrichtung, in eine zweidimensionale Tiefenkarte des maßgeblichen Schutzfelds aus Sicht der Sensorvorrichtung umgewandelt wird. Das maßgebliche Schutzfeld kann aber auch direkt als maßgebliche Lookup-Tabelle ermittelt werden, beispielsweise indem diese durch Kombination der ersten Lookup-Tabelle und der zweiten Lookup-Tabelle gebildet wird, wie weiter unten noch erläutert wird.

Wenn die maßgebliche Lookup-Tabelle einer zweidimensionalen Tiefenkarte entspricht, können die ermittelte 3D-Repräsentation und die maßgebliche Lookup-Tabelle auf einfache Weise dadurch verglichen werden, dass jeder Wert (Bildpunkt) der ermittelten 3D-Repräsentation mit dem Wert des entsprechenden Feldes (Bildpunkts) der Lookup-Tabelle verglichen wird. Der Vergleich kann sich dabei auf solche Werte beschränken, die aufgrund ihrer Lage innerhalb der 3D-Repräsentation bzw. der Lookup-Tabelle dem maßgeblichen Schutzfeld zuzuordnen sind. Falls ein solcher Wert der ermittelten 3D-Repräsentation einem geringeren Abstand von der Sensorvorrichtung entspricht als der entsprechende in der maßgeblichen Lookup-Tabelle hinterlegte Wert, ist dies ein Hinweis darauf, dass sich ein Objekt in dem maßgeblichen Schutzfeld befindet.

Die Lookup-Tabelle kann auch so definiert werden, dass nicht zwischen Werten, die dem maßgeblichen Schutzfeld zuzuordnen sind, und solchen, die nicht dem maßgeblichen Schutzfeld zuzuordnen sind, unterschieden werden muss, sondern dass alle Werte der ermittelten 3D-Repräsentation jeweils mit dem entsprechenden Wert der maßgeblichen Lookup-Tabelle verglichen werden. Beispielweise können hierzu beim Ermitteln der maßgeblichen Lookup-Tabelle alle Werte, die nicht dem maßgeblichen Schutzfeld zuzuordnen sind, einem Abstand von Null entsprechend gesetzt werden, so dass nur dem maßgeblichen Schutzfeld zuzuordnende Werte der ermittelten 3D-Repräsentation kleiner als der entsprechende in der maßgeblichen Lookup-Tabelle hinterlegte Wert sein können. Wenn dann für einen beliebigen Wert der ermittelten 3D-Repräsentation festgestellt wird, dass er einem geringeren Abstand von der Sensorvorrichtung entspricht als der entsprechende in der maßgeblichen Lookup-Tabelle hinterlegte Wert, ist dies ein Hinweis darauf, dass sich ein Objekt in dem maßgeblichen Schutzfeld befindet.

Dabei kann jeweils vorgesehen sein, dass sobald ein einziger solcher Hinweis vorliegt, das Ergebnis der Auswertung einem Eingreifen eines Objekts in das maßgebliche Schutzfeld entspricht. Es ist aber auch denkbar, dass die Auswertung erst dann zu diesem Ergebnis führt, wenn ein solcher Hinweis für mehrere zueinander benachbarte Werte (Bildpunkte) vorliegt.

Gemäß einer weiteren vorteilhaften Ausführungsform wird das erste angepasste Schutzfeld in Form einer ersten Lookup-Tabelle ermittelt, wird das zweite angepasste Schutzfeld in Form einer zweiten Lookup-Tabelle ermittelt und umfasst das Ermitteln des maßgeblichen Schutzfelds (in Form der maßgeblichen Lookup-Tabelle): dass durch Unterabtastung der ersten Lookup-Tabelle gemäß einem vorgegebenen Abtastmuster eine erste Teil-Lookup-Tabelle gebildet wird; dass durch Unterabtastung der zweiten Lookup-Tabelle gemäß dem Inversen des vorgegebenen Abtastmusters eine zweite Teil-Lookup-Tabelle gebildet wird; und dass die maßgebliche Lookup-Tabelle durch Kombination der ersten Teil-Lookup-Tabelle mit der zweiten Teil-Lookup-Tabelle gebildet wird.

Das Ermitteln des ersten angepassten Schutzfelds in Form einer ersten Lookup-Tabelle und das Ermitteln des zweiten angepassten Schutzfelds in Form einer zweiten Lookup-Tabelle kann jeweils umfassen, dass zunächst das erste bzw. zweite Schutzfeld als dreidimensionaler Raumbereich definiert wird, der dann in die erste bzw. zweite Lookup-Tabelle umgewandelt wird, indem er, vorzugsweise unter Berücksichtigung optischer Parameter der Sensorvorrichtung, in eine zweidimensionale Tiefenkarte des ersten bzw. zweiten Schutzfelds aus Sicht der Sensorvorrichtung umgewandelt wird. Die erste Lookup-Tabelle und die zweite Lookup-Tabelle werden dabei insbesondere jeweils so ermittelt, dass sie dieselben Maße (Breite und Höhe bzw. Auflösung) wie die vorzugweise als Tiefenkarte ermittelte 3D-Repräsentation aufweisen. Außerdem kann auch schon das initiale Schutzfeld in Form einer auf entsprechende Weise ausgebildeten (initialen) Lookup-Tabelle definiert sein, von der ausgehend die beiden angepassten Schutzfelder dann jeweils direkt in Form einer Lookup-Tabelle ermittelt werden können.

Für das Ermitteln des maßgeblichen Schutzfelds (in Form der maßgeblichen Lookup-Tabelle) werden aus der ersten Lookup-Tabelle und der zweiten Lookup-Tabelle zunächst durch Unterabtastung eine erste Teil-Lookup-Tabelle und eine zweite Teil-Lookup-Tabelle gebildet. Dabei wird die erste Teil-Lookup-Tabelle vorzugsweise durch die erste Anpassungsvorrichtung und die zweite Teil-Lookup-Tabelle vorzugsweise durch die zweite Anpassungsvorrichtung gebildet.

Bei der genannten Unterabtastung handelt es sich jeweils um eine räumliche Unterabtastung. Die Unterabtastung der ersten Lookup-Tabelle erfolgt gemäß einem vorgegebenen Abtastmuster, das für jedes Feld der ersten Lookup-Tabelle definiert, ob es beibehalten oder verworfen (z. B. geleert oder auf Null gesetzt) wird. Die Unterabtastung der zweiten Lookup-Tabelle erfolgt dagegen gemäß dem Inversen dieses vorgegebenen Abtastmusters, so dass jedes Feld der zweiten Lookup-Tabelle, das einem beibehaltenen Feld der ersten Lookup-Tabelle entspricht, verworfen wird, und jedes Feld der zweiten Lookup-Tabelle, das einem verworfenen Feld der ersten Lookup-Tabelle entspricht, beibehalten wird. Die beiden Teil-Lookup-Tabellen umfassen somit zueinander komplementäre Teile der jeweiligen Lookup-Tabelle, aus der sie gebildet sind. Die erste Teil-Lookup-Tabelle und die zweite Teil-Lookup-Tabelle sind folglich räumlich disjunkt, ihre räumliche Überlagerung entspricht aber wieder einer vollständigen Lookup-Tabelle.

Daher kann die maßgebliche Lookup-Tabelle durch Kombination, nämlich insbesondere durch räumliche Überlagerung, der ersten Teil-Lookup-Tabelle und der zweiten Teil-Lookup-Tabelle miteinander gebildet werden. Jedes Feld der maßgeblichen Lookup-Tabelle enthält dann gemäß dem Abtastmuster entweder den Wert des entsprechenden Feldes der ersten Lookup-Tabelle (nämlich dann, wenn dieses Feld gemäß dem Abtastmuster beibehalten wird) oder den Wert des entsprechenden Feldes der zweiten Lookup-Tabelle (nämlich dann, wenn dieses Feld gemäß dem Abtastmuster verworfen und somit gemäß dem Inversen des Abtastmusters beibehalten wird). Falls vorgesehen ist, dass bei der Unterabtastung Felder dadurch verworfen werden, dass sie auf Null gesetzt werden, kann die Kombination der ersten Teil-Lookup-Tabelle und der zweiten Teil-Lookup-Tabelle miteinander auch durch eine Addition der beiden Teil-Lookup-Tabellen erfolgen.

Das Bilden der maßgeblichen Lookup-Tabelle durch Kombination der beiden Teil-Lookup-Tabellen miteinander erfolgt vorzugsweise durch die Auswertevorrichtung. Dazu kann die Auswertevorrichtung von der ersten Anpassungsvorrichtung die erste Teil-Lookup-Tabelle und von der zweiten Anpassungsvorrichtung die zweite Teil-Lookup-Tabelle empfangen. Insbesondere kann vorgesehen sein, dass die Auswertevorrichtung von den Anpassungsvorrichtungen nur die jeweilige Teil-Lookup-Tabelle und nicht auch die jeweilige (vollständige) Lookup-Tabelle empfängt.

Gemäß einer vorteilhaften Ausführungsform wird durch die Unterabtastung jeweils zumindest im Wesentlichen die Hälfte der Felder der jeweiligen Lookup-Tabelle verworfen. Mit anderen Worten ist das Abtastmuster derart ausgebildet, dass bei der Unterabtastung der ersten Lookup-Tabelle zumindest im Wesentlichen die Hälfte der Felder der ersten Lookup-Tabelle verworfen wird und folglich zumindest im Wesentlichen die (andere) Hälfte der Felder der ersten Lookup-Tabelle beibehalten wird. Entsprechendes gilt dann zwangsläufig auch für die zweite Lookup-Tabelle. Durch ein solches Vorgehen wird eine ungleiche Gewichtung der beiden angepassten Schutzfelder vermieden.

Gemäß einer weiteren vorteilhaften Ausführungsform sind in dem Abtastmuster Bereiche, die bei der Unterabtastung beibehalten werden, und Bereiche, die bei der Unterabtastung verworfen werden, vorzugsweise über die gesamte zweidimensionale Ausdehnung des Abtastmusters, homogen verteilt. Bei den genannten Bereichen kann es sich jeweils um Gruppen benachbarter Felder handeln. Grundsätzlich kann ein solcher Bereich aber auch durch ein einzelnes Feld gebildet werden. Die homogene Verteilung verworfener und beibehaltener Bereiche sorgt für eine gleichmäßige Durchmischung der ersten Lookup-Tabelle und der zweiten Lookup-Tabelle bei ihrer Kombination zu der maßgeblichen Lookup-Tabelle. Auf diese Weise kann die maßgebliche Lookup-Tabelle im Wesentlichen überall sowohl auf Anteilen der ersten Lookup-Tabelle als auch auf Anteilen der zweiten Lookup-Tabelle beruhen.

Das hat vorteilhafterweise zur Folge, dass die maßgebliche Lookup-Tabelle einem maßgeblichen Schutzfeld entspricht, das im Wesentlichen einer räumlichen Vereinigung des ersten angepassten Schutzfelds und des zweiten angepassten Schutzfelds entspricht. Abweichungen zwischen dem ersten angepassten Schutzfeld und dem zweiten angepassten Schutzfeld, die sich aus einem fehlerhaften Ermitteln eines der beiden angepassten Schutzfelder ergeben können, können auf diese Weise kompensiert werden.

Denn wenn der Fehler dazu führt, dass das fehlerhafte angepasste Schutzfeld zu klein ist, so dass eine zu große Annäherung eines Objekts an die bewegliche Maschine (bzw. andersherum) möglich ist, ohne dass es zu einem Eingriff in dieses fehlerhafte angepasste Schutzfeld kommt, erfolgt bei einer solchen Annäherung jedenfalls noch ein Eingriff in das andere angepasste Schutzfeld. Aufgrund der Kombination der beiden angepassten Schutzfelder mit homogener Verteilung findet somit auch ein Eingriff in das durch diese Kombination gebildete maßgebliche Schutzfeld statt, so dass sich der Fehler nicht auswirkt und die funktionale Sicherheit gewährleistet bleibt. Wenn dagegen der Fehler dazu führt, dass das fehlerhafte angepasste Schutzfeld zu groß ist, erfolgt schon bei einem eigentlich noch zulässigen Abstand ein Eingriff in das fehlerhafte angepasste Schutzfeld und somit auch ein Eingriff in das durch Kombination der beiden angepassten Schutzfelder gebildete maßgebliche Schutzfeld. Dies kann zwar dazu führen, dass die sicherheitsgerichtete Reaktion unnötigerweise oder unnötig früh ausgelöst wird; die funktionale Sicherheit wird dadurch jedoch nicht beeinträchtigt.

Gemäß einer weiteren vorteilhaften Ausführungsform ist das Abtastmuster ein Schachbrettmuster. Bei einem solchen Abtastmuster wechseln sich in allen Zeilen und Spalten jeweils eine feste Anzahl von Feldern, die bei der Unterabtastung verworfen werden, und eine entsprechende Anzahl von Feldern, die bei der Unterabtastung beibehalten werden, regelmäßig ab (insbesondere können sich jeweils genau ein verworfenes und ein beibehaltenes Feld abwechseln). Infolgedessen wechseln sich dann in der maßgeblichen Lookup-Tabelle in entsprechender Weise Felder, deren Wert dem Wert des jeweils entsprechenden Feldes der ersten Lookup-Tabelle entspricht, und Felder, deren Wert dem Wert des jeweils entsprechenden Feldes der zweiten Lookup-Tabelle entspricht, regelmäßig ab. Die erste Lookup-Tabelle und die zweite Lookup-Tabelle sind dadurch in der maßgeblichen Lookup-Tabelle schachbrettartig miteinander verwoben.

Ein Schachbrettmuster als Abtastmuster lässt sich vergleichsweise einfach realisieren. Zudem sind in einem Abtastmuster, bei dem es sich um ein Schachbrettmuster handelt, Bereiche, die bei der Unterabtastung beibehalten werden, und Bereiche, die bei der Unterabtastung verworfen werden, homogen verteilt; außerdem werden durch die Unterabtastung gemäß dem Schachbrettmuster bzw. dem Inversen des Schachbrettmusters jeweils gerade die Hälfte der Felder der jeweiligen Lookup-Tabelle verworfen. Durch die Verwendung eines Schachbrettmusters als Abtastmuster werden daher die für die vorhergehenden Ausführungsformen genannten Vorteile miteinander kombiniert.

Gemäß einer weiteren vorteilhaften Ausführungsform umfasst das Verfahren ferner: dass für das maßgebliche Schutzfeld ein Stetigkeitskriterium geprüft wird; und dass, wenn das Stetigkeitskriterium nicht erfüllt ist, ein Warnhinweis an einen Nutzer der beweglichen Maschine ausgegeben wird. Mit anderen Worten wird das maßgebliche Schutzfeld im Hinblick darauf geprüft, ob es stetig ist. Das Prüfen des Stetigkeitskriteriums kann insbesondere durch die Auswertevorrichtung erfolgen.

Das Prüfen kann beispielsweise umfassen, dass ermittelt wird, ob das maßgebliche Schutzfeld einen einzelnen kontinuierlichen Raumbereich bildet oder Unterbrechungen aufweist. Da das maßgebliche Schutzfeld in Form der genannten maßgeblichen Lookup-Tabelle vorliegen kann, kann das Stetigkeitskriteriums für das maßgebliche Schutzfeld auch anhand der maßgeblichen Lookup-Tabelle geprüft werden. Das kann insbesondere umfassen, dass (in zumindest einer Dimension, vorzugsweise in beiden Dimensionen, der zweidimensionalen Lookup-Tabelle) Differenzen zwischen den Werten benachbarter Felder der maßgeblichen Lookup-Tabelle ermittelt werden. Beispielsweise kann für jedes Feld der maßgeblichen Lookup-Tabelle die mittlere Differenz des Wertes dieses Feldes zu den Werten der dazu unmittelbar benachbarten Felder ermittelt werden. Das Stetigkeitskriterium kann zum Beispiel dann erfüllt sein, wenn die ermittelte Differenz für alle Felder unterhalb eines bestimmten Schwellenwerts liegt. Alternativ dazu kann das Stetigkeitskriterium beispielsweise dann erfüllt sein, wenn es jedenfalls keine Gruppe bestehend aus einer bestimmten Anzahl benachbarter Felder gibt, bei der die ermittelte Differenz für alle Felder der Gruppe einen bestimmten Schwellenwert überschreitet.

Sofern das Stetigkeitskriterium nicht erfüllt ist - sofern also das maßgebliche Schutzfeld bzw. die maßgebliche Lookup-Tabelle einen oder mehrere unstetige Bereiche aufweist - ist das ein Hinweis darauf, dass das erste angepasste Schutzfeld und das zweite angepasste Schutzfeld (bzw. die erste Lookup-Tabelle und die zweite Lookup-Tabelle) nicht konsistent zueinander sind. Da das maßgebliche Schutzfeld (bzw. die maßgebliche Lookup-Tabelle) auf Grundlage sowohl des ersten angepassten Schutzfelds als auch des zweiten angepassten Schutzfelds ermittelt wird, braucht die anhand des Stetigkeitskriteriums feststellbare Inkonsistenz vorteilhafterweise nicht zu einem sicherheitsgerichteten Abschalten der beweglichen Maschine zu führen, sondern der Betrieb der beweglichen Maschine kann in sicherer Weise vorläufig fortgesetzt werden. Allerdings ist es zweckmäßig, dass eine festgestellte Inkonsistenz zwischen den angepassten Schutzfeldern einem Nutzer der beweglichen Maschine signalisiert wird, so dass zu einem geeigneten Zeitpunkt - etwa nach Abschluss eines bestimmten Arbeitsprozesses - die Fehlerquelle identifiziert und der Fehler, der zu der Inkonsistenz geführt hat, behoben werden können. Ein entsprechender Warnhinweis kann beispielsweise in Form eines optischen und/oder akustischen Warnsignals ausgegeben werden.

Die erfindungsgemäße Sicherheitseinrichtung dient dem sicheren Betrieb einer beweglichen Maschine und umfasst eine Sensorvorrichtung, eine Auswertevorrichtung sowie eine erste Anpassungsvorrichtung und eine zweite Anpassungsvorrichtung. Die Sensorvorrichtung ist dabei dazu ausgebildet, eine 3D-Repräsentation einer Umgebung der beweglichen Maschine zu ermitteln. Die erste Anpassungsvorrichtung ist dazu ausgebildet, Zustandsdaten über die bewegliche Maschine zu empfangen und ausgehend von einem vorgegebenen initialen Schutzfeld in Abhängigkeit von den Zustandsdaten ein erstes angepasstes Schutzfeld zu ermitteln. Die zweite Anpassungsvorrichtung ist dazu ausgebildet, Zustandsdaten über die bewegliche Maschine zu empfangen und ausgehend von dem vorgegebenen initialen Schutzfeld in Abhängigkeit von den Zustandsdaten ein zweites angepasstes Schutzfeld zu ermitteln. Die erste Anpassungsvorrichtung und die zweite Anpassungsvorrichtung empfangen vorzugsweise jeweils dieselben Zustandsdaten. Die Zustandsdaten können dabei insbesondere von einer Steuereinheit zur Steuerung der beweglichen Maschine empfangen werden. Die Auswertevorrichtung ist dazu ausgebildet, die ermittelte 3D-Repräsentation im Hinblick darauf auszuwerten, ob ein Objekt in ein auf Grundlage sowohl des ersten angepassten Schutzfelds als auch des zweiten angepassten Schutzfelds ermitteltes maßgebliches Schutzfeld eingreift, und in Abhängigkeit von dem Ergebnis der Auswertung ein Ergebnissignal auszugeben. Die Auswertevorrichtung kann die ermittelte 3D-Repräsentation von der Sensorvorrichtung empfangen, in die die Auswertevorrichtung aber auch integriert sein kann. Das maßgebliche Schutzfeld kann durch die Auswertevorrichtung ermittelt werden, die dazu das erste angepasste Schutzfeld und das zweite angepasste Schutzfeld von den Anpassungsvorrichtungen empfangen kann, die vorzugsweise von der Sensorvorrichtung und der Auswertevorrichtung separat ausgebildet sind.

Die im Zusammenhang mit dem erfindungsgemäßen Verfahren erläuterten Eigenschaften, Ausbildungsmöglichkeiten und Vorteile der an dem Verfahren beteiligten Elemente gelten in entsprechender Weise auch für die Elemente der vorliegenden erfindungsgemäßen Sicherheitseinrichtung.

Die erfindungsgemäße Maschineneinrichtung umfasst eine bewegliche Maschine, eine Steuereinheit zur Steuerung der beweglichen Maschine sowie eine erfindungsgemäße Sicherheitseinrichtung. Die Steuereinheit ist dabei dazu ausgebildet, das Ergebnissignal von der Auswertevorrichtung empfangen und eine sicherheitsgerichtete Reaktion auszulösen, wenn das Ergebnissignal einem Eingreifen eines Objekts in das maßgebliche Schutzfeld entspricht. Um das Ergebnissignal von der Auswertevorrichtung zu empfangen, kann die Steuereinheit direkt oder indirekt mit der Auswertevorrichtung verbunden sein. Das Auslösen der sicherheitsgerichteten Reaktion kann insbesondere darin bestehen, dass die Steuereinheit die bewegliche Maschine dazu ansteuert, sich mit reduzierter Geschwindigkeit zu bewegen oder anzuhalten.

Die erfindungsgemäße Maschineneinrichtung ist vorzugweise dazu ausgebildet, ein erfindungsgemäßes Verfahren, insbesondere gemäß einer der beschriebenen Ausführungsformen des Verfahrens, auszuführen. Dadurch gelten die sich aus der jeweiligen Ausführungsform des Verfahrens ergebenden Vorteile entsprechend auch für die Maschineneinrichtung.

Die Erfindung wird im Folgenden lediglich beispielhaft anhand der Figuren weiter erläutert.
- Fig. 1: zeigt eine erfindungsgemäße Sicherheitseinrichtung als Teil einer erfindungsgemäßen Maschineneinrichtung in stark vereinfachter schematischer Darstellung.
- Fig. 2: zeigt exemplarisch eine Ausführungsform eines angepassten Schutzfelds in Form einer Lookup-Tabelle.
- Fig. 3: zeigt eine durch Unterabtastung der in Fig. 2 gezeigten Lookup-Tabelle gebildete Teil-Lookup-Tabelle.

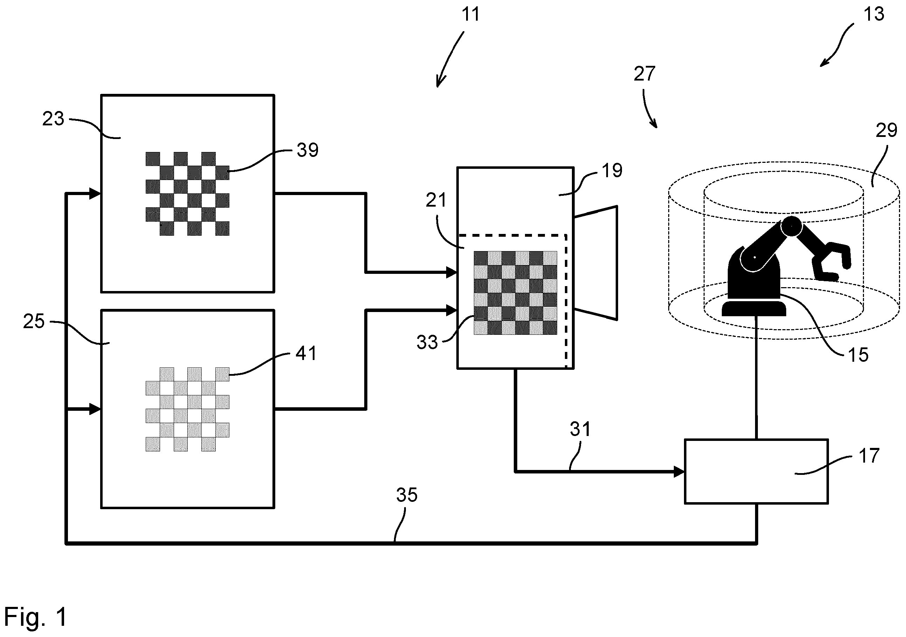

In Fig. 1 ist eine beispielhafte Ausführungsform einer erfindungsgemäßen Sicherheitseinrichtung 11 als Teil einer erfindungsgemäßen Maschineneinrichtung 13 in stark vereinfachter schematischer Darstellung gezeigt. Die Maschineneinrichtung 13 umfasst neben der Sicherheitseinrichtung 11 eine bewegliche Maschine 15, bei der es sich hier um einen Roboterarm handelt, sowie eine Steuereinheit 17, die zur Steuerung der beweglichen Maschine 15 ausgebildet ist. Mittels der Steuereinheit 17 kann die bewegliche Maschine 15 insbesondere dazu angesteuert werden, verschiedene Positionen einzunehmen und/oder verschiedene Bewegungen auszuführen. Außerdem kann die Steuereinheit 17 verschiedene Betriebsmodi der beweglichen Maschine 15 aktivieren bzw. deaktivieren, beispielsweise einen Betriebsmodus, in dem die bewegliche Maschine 15 mittels eines daran vorgesehenen Werkzeugs ein Werkstück (nicht gezeigt) bearbeitet.

Die Sicherheitseinrichtung 11 umfasst eine Sensorvorrichtung 19, eine Auswertevorrichtung 21 sowie eine erste Anpassungsvorrichtung 23 und eine zweite Anpassungsvorrichtung 25. Die Sensorvorrichtung 19, die beispielsweise als dreidimensionaler Laserscanner ausgebildet sein kann, ist dazu ausgebildet, Positionsdaten über eine Umgebung 27 der beweglichen Maschine 15 zu erfassen und basierend auf diesen Positionsdaten eine 3D-Repräsentation der Umgebung 27 zu ermitteln. Die 3D-Repräsentation wird bei der vorliegenden Ausführungsform in Form einer Tiefenkarte ermittelt, also als zweidimensionales Bild, dessen Bildpunkte jeweils den Abstand des dem jeweiligen Bildpunkt entsprechenden Raumpunkts von der Sensorvorrichtung 19 repräsentieren. Die Auswertevorrichtung 21 ist in die Sensorvorrichtung 19 integriert und dazu ausgebildet, die ermittelte 3D-Repräsentation im Hinblick darauf auszuwerten, ob ein Objekt in ein maßgebliches Schutzfeld 29 eingreift, bei dem es sich um einen definierten Raumbereich innerhalb der Umgebung 27 der beweglichen Maschine 15 handelt.

In Abhängigkeit von dem Ergebnis dieser Auswertung gibt die Auswertevorrichtung 21 ein Ergebnissignal 31 an die Steuereinheit 17 aus. Wenn das von der Steuereinheit 17 empfangene Ergebnissignal 31 einem Eingreifen eines Objekts in das maßgebliche Schutzfeld 29 entspricht, löst sie eine sicherheitsgerichtete Reaktion aus, indem sie die bewegliche Maschine 15 dazu ansteuert, sich mit reduzierter Geschwindigkeit zu bewegen. Die sicherheitsgerichtete Reaktion kann auch darin bestehen, dass die Steuereinheit 17 die bewegliche Maschine 15 unverzüglich vollständig stoppt (Nothalt).

Auf diese Weise kann die bewegliche Maschine 15 im Rahmen einer Mensch-Roboter-Interaktion betrieben und dabei eine Gefährdung für beteiligte Person durch die bewegliche Maschine 15 vermieden werden. Denn das maßgebliche Schutzfeld 29 ist zweckmäßigerweise so definiert, dass es einen Raumbereich, in dem sich Personen aufhalten können von dem Raumbereich, den die bewegliche Maschine 15 einnehmen kann, voneinander trennt. Sollte ein Objekt (beispielsweise eine Person) oder auch die bewegliche Maschine 15 in das Schutzfeld 29 eindringen, wird die sicherheitsgerichtete Reaktion ausgelöst, durch die ein Kontakt des Objekts mit der beweglichen Maschine verhindert wird oder jedenfalls weitgehend sichergestellt wird, dass der Kontakt ungefährlich wäre. Infolgedessen kann die bewegliche Maschine 15 sicher betrieben werden.

Für die Auswertung, ob ein Objekt in das maßgebliche Schutzfeld 29 eingreift, wird die ermittelte 3D-Repräsentation mit dem maßgeblichen Schutzfeld 29 verglichen. Dazu liegt das maßgebliche Schutzfeld 29 bei der gezeigten Ausführungsform in Form einer maßgeblichen Lookup-Tabelle 33 vor, die hinsichtlich ihrer Struktur (Anzahl der Zeilen und Spalten) der als Tiefenkarte ermittelten 3D-Repräsentation entspricht. Dadurch kann für die Auswertung der ermittelten 3D-Repräsentation jeder Wert der ermittelten 3D-Repräsentation mit dem Wert des entsprechenden Feldes der Lookup-Tabelle 33 verglichen werden.

Das maßgebliche Schutzfeld 29 kann zunächst einem initialen Schutzfeld entsprechen, das relativ zu der beweglichen Maschine 15 definiert sein kann. Auch das initiale Schutzfeld kann dabei als (initiale) Lookup-Tabelle vorliegen, die beispielsweise dadurch gewonnen werden kann, dass das initiale Schutzfeld unter Berücksichtigung optischer Parameter der Sensorvorrichtung 19 in eine zweidimensionale Tiefenkarte umgerechnet wird. Das initiale Schutzfeld ist dabei für den jeweiligen Betrieb der beweglichen Maschine 15 fest vorgegeben und insofern statisch. Vorteilhafter Weise wird das maßgebliche Schutzfeld 29 jedoch an den jeweiligen Zustand der beweglichen Maschine 15, etwa an ihre aktuelle Position, ihre aktuelle Geschwindigkeit und/oder ihren aktuellen Betriebsmodus, insbesondere fortlaufend angepasst, um zu vermeiden, dass ein größerer Raumbereich als nötig für Personen unzugänglich ist. So kann das maßgebliche Schutzfeld 29 etwa bei geringeren Geschwindigkeiten der beweglichen Maschine 15 eine geringere Dicke aufweisen als bei größeren Geschwindigkeiten der beweglichen Maschine 15.

Damit das maßgebliche Schutzfeld 29 dynamisch an den jeweiligen Zustand der beweglichen Maschine 15 angepasst sein kann, sind die erste Anpassungsvorrichtung 23 und die zweite Anpassungsvorrichtung 25 vorgesehen, die jeweils ein angepasstes Schutzfeld ermitteln. Zu diesem Zweck empfangen die beiden Anpassungsvorrichtungen 23, 25 von der Steuereinheit 17 Zustandsdaten 35, die Informationen über den aktuellen Zustand der beweglichen Maschine 15 umfassen. Ausgehend von dem initialen Schutzfeld werden dann in Abhängigkeit von den empfangenen Zustandsdaten 35 von der ersten Anpassungsvorrichtung 23 ein erstes angepasstes Schutzfeld 37 und von der zweiten Anpassungsvorrichtung 25 ein zweites angepasstes Schutzfeld ermittelt.

Damit die Sicherheit der, vorzugsweise für einen sicheren Betrieb zertifizierten, Sensorvorrichtung 19 nicht beeinträchtigt wird, erfolgt das Ermitteln der angepassten Schutzfelder vorzugsweise außerhalb der Sensorvorrichtung 19 in den von der Sensorvorrichtung 19 separat ausgebildeten Anpassungsvorrichtungen 23, 25. Die Anpassungsvorrichtungen 23, 25 sind auch voneinander separat ausgebildet. Zudem sind sie in ihrer Funktion voneinander unabhängig. Insbesondere wird von der ersten Anpassungsvorrichtung 23 für das Ermitteln des ersten angepassten Schutzfelds zum Beispiel ein anderer Algorithmus verwendet als von der zweiten Anpassungsvorrichtung 25 für das Ermitteln des zweiten angepassten Schutzfelds. Somit erfolgt das Anpassen des Schutzfelds an den aktuellen Zustand der beweglichen Maschine 15 nicht nur auf redundante, sondern auch auf diversitäre Weise.

Grundsätzlich kann bei dem Ermitteln der angepassten Schutzfelder jeweils einen Fehler auftreten. Ein typisches Vorgehen, um einen solchen Fehler auszuschließen, besteht darin, die beiden angepassten Schutzfelder miteinander zu vergleichen. Denn aufgrund der geringen Wahrscheinlichkeit, dass zwei auf unterschiedliche Weise ermittelte angepasste Schutzfelder jeweils fehlerhaft ermittelt werden und dabei zu demselben fehlerhaft angepassten Schutzfeld führen, kann aus einer Übereinstimmung der beiden angepassten Schutzfelder darauf geschlossen werden, dass kein Fehler vorliegt, so dass das maßgebliche Schutzfeld 29 einfach mit einem der beiden (übereinstimmenden) angepassten Schutzfelder gleichgesetzt werden kann. Wird dagegen eine Abweichung zwischen den beiden angepassten Schutzfeldern festgestellt, lässt sich nicht feststellen, welches der beiden angepassten Schutzfelder fehlerhaft ist, so dass in sicherheitsgerichteter Weise reagiert werden muss, nämlich in der Regel durch ein Abschalten der beweglichen Maschine 15.

Um dies sowie den aufwendigen Vergleich der angepassten Schutzfelder zu vermeiden, wird das maßgeblichen Schutzfeld 29 erfindungsgemäß anders ermittelt. Insbesondere findet kein Vergleich der beiden angepassten Schutzfelder statt, sondern das maßgebliche Schutzfeld 29 wird direkt auf Grundlage sowohl des ersten angepassten Schutzfelds als auch des zweiten angepassten Schutzfelds ermittelt. Das maßgebliche Schutzfeld 29 entspricht insofern einer Kombination der beiden durch die Anpassungsvorrichtungen 23, 25 ermittelten angepassten Schutzfelder, wobei diese Kombination bei dem gezeigten Ausführungsbeispiel einer räumlichen Überlagerung der angepassten Schutzfelder entspricht.

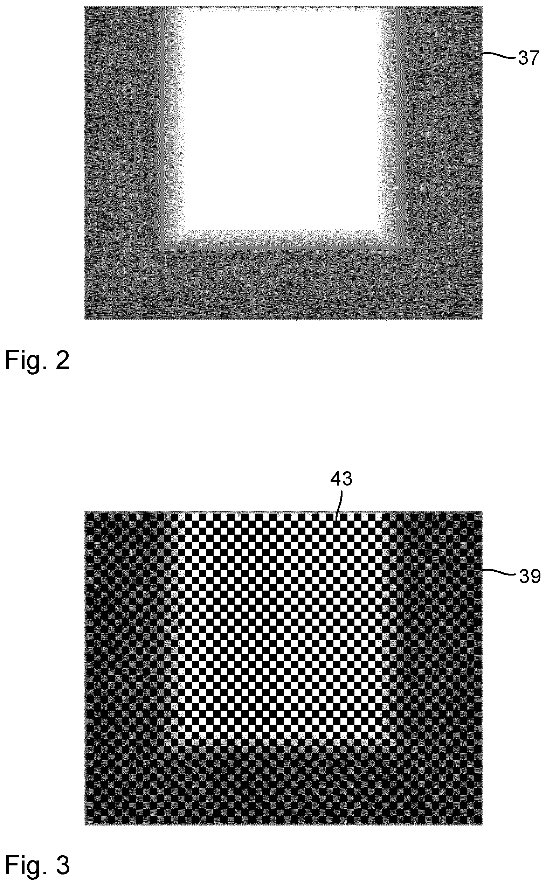

Das erste angepasste Schutzfeld und das zweite angepasste Schutzfeld werden jeweils wie das maßgebliche Schutzfeld 29 in Form einer Lookup-Tabelle, nämlich in Form einer ersten Lookup-Tabelle 37 bzw. in Form einer zweiten Lookup-Tabelle, ermittelt. In Fig. 2 ist ein Beispiel für eine erste Lookup-Tabelle 37 als Bild gezeigt, wobei die Helligkeit der Bildpunkte des Bildes jeweils dem Wert des entsprechenden Feldes der ersten Lookup-Tabelle 37 entspricht. Die erste Lookup-Tabelle 37 und die zweite Lookup-Tabelle sind jeweils nach Art einer Tiefenkarte ausgebildet und weisen dieselben Maße auf wie die von der Sensorvorrichtung ermittelte und ebenfalls als Tiefenkarte vorliegende 3D-Repräsentation.

Die Anpassungsvorrichtungen 23, 25 geben die ermittelte erste Lookup-Tabelle 37 und die ermittelte zweite Lookup-Tabelle jedoch nicht vollständig an die Auswertevorrichtung 21 aus, sondern jeweils nur einen Teil, nämlich eine erste Teil-Lookup-Tabelle 39 und eine zweite Teil-Lookup Tabelle 41. Die erste Teil-Lookup-Tabelle 39 wird durch Unterabtastung der ersten Lookup-Tabelle 37 gemäß einem vorgegebenen Abtastmuster 43 gebildet, bei dem es sich um ein Schachbrettmuster handelt, während die zweite Teil-Lookup-Tabelle 41 durch Unterabtastung der zweiten Lookup-Tabelle gemäß dem Inversen des Abtastmusters 43 gebildet wird. In der zweiten Teil-Lookup-Tabelle 41 werden bei der Unterabtastung also gerade diejenigen Felder beibehalten, die in der ersten Teil-Lookup-Tabelle 39 verworfen werden, und umgekehrt. Die beiden Teil-Lookup-Tabellen 39, 41 sind insofern komplementär zueinander. Die maßgebliche Lookup-Tabelle 33 kann daher auf einfache Weise dadurch gebildet werden, dass sie alle Werte der ersten Teil-Lookup-Tabelle 39 (also alle beibehaltenen Werte der ersten Lookup-Tabelle 37) und alle Werte der zweiten Teil-Lookup-Tabelle 41 (also alle beibehaltenen Werte der zweiten Lookup-Tabelle) an deren jeweiliger Position enthält.

In Fig. 3 ist ein Beispiel für eine erste Teil-Lookup-Tabelle 39 gezeigt, die auf der in Fig. 2 gezeigten ersten Lookup-Tabelle 37 beruht und durch Unterabtastung der ersten Lookup-Tabelle 37 gemäß dem Abtastmuster 43 gebildet ist, bei dem es sich um ein Schachbrettmuster handelt. Alle verworfenen Felder der ersten Lookup-Tabelle 37 sind dabei in der Teil-Lookup-Tabelle 39 schwarz dargestellt. Die erste Teil-Lookup-Tabelle 39 ist auch in Fig. 1 gezeigt, dort allerdings - ebenso wie die zweite Teil-Lookup-Tabelle 41 und die maßgebliche Lookup-Tabelle 33, die ebenfalls in Fig. 1 gezeigt sind - in stark vereinfachter Darstellung: Es sind jeweils nur wenige Zeilen und Spalten gezeigt, wobei die verworfenen Felder hier nicht schwarz, sondern leer (weiß) dargestellt sind; außerdem entspricht die Helligkeit der Felder der in Fig. 1 dargestellten Lookup-Tabellen nicht dem Wert des jeweiligen Feldes der jeweiligen Lookup-Tabelle, sondern dient in Fig. 1 lediglich der Unterscheidung zwischen Feldern der ersten Teil-Lookup-Tabelle 39 und Feldern der zweiten Teil-Lookup-Tabelle 41, insbesondere um kenntlich zu machen, welche Felder der maßgeblichen Lookup-Tabelle 33 aus der ersten Teil-Lookup-Tabelle 39 stammen und welche aus der zweiten Teil-Lookup-Tabelle 41.

Die Darstellung veranschaulicht, dass in der maßgeblichen Lookup-Tabelle 33 die erste Lookup-Tabelle 37 und die zweite Lookup-Tabelle sozusagen miteinander verwoben sind. Die erste Lookup-Tabelle 37 und die zweite Lookup-Tabelle tragen dabei jeweils zur Hälfte zur maßgeblichen Lookup-Tabelle 33 bei, wobei die Anteile, die aus der ersten Teil-Lookup-Tabelle 39 übernommen wurden, und die Anteile, die aus der zweiten Teil-Lookup-Tabelle 41 übernommen wurden, über die gesamte maßgebliche Lookup-Tabelle 33 homogen verteilt sind.

Auf diese Weise werden bei der Auswertung der ermittelten 3D-Repräsentation anhand der maßgeblichen Lookup-Tabelle 33 die erste Lookup-Tabelle 37 und die zweite Lookup-Tabelle gleichermaßen berücksichtigt, so als ob die Auswertung gleichzeitig einerseits in Bezug auf das erste angepasste Schutzfeld und andererseits in Bezug auf das zweite angepasste Schutzfeld durchgeführt würde. Im Ergebnis wird dadurch eine hohe Sicherheit erreicht, ohne dass die angepassten Schutzfelder miteinander verglichen werden müssten und ohne dass eine mögliche Diskrepanz zwischen den beiden angepassten Schutzfeldern sofort zu einem sicherheitsgerichteten Abschalten der beweglichen Maschine 15 führen muss. So kann die bewegliche Maschine 15 anhand dynamisch angepasster Schutzfelder mit einem hohen Sicherheitsniveau besonders produktiv betrieben werden.

### Bezugszeichen

- 11: Sicherheitseinrichtung
- 13: Maschineneinrichtung
- 15: bewegliche Maschine
- 17: Steuereinheit
- 19: Sensorvorrichtung
- 21: Auswertevorrichtung
- 23: erste Anpassungsvorrichtung
- 25: zweite Anpassungsvorrichtung
- 27: Umgebung
- 29: maßgebliches Schutzfeld
- 31: Ergebnissignal
- 33: maßgebliche Lookup-Tabelle
- 35: Zustandsdaten
- 37: erste Lookup-Tabelle
- 39: erste Teil-Lookup-Tabelle
- 41: zweite Teil-Lookup-Tabelle
- 43: Abtastmuster

## Patentansprüche

1. Verfahren zum sicheren Betrieb einer beweglichen Maschine (15),
wobei das Verfahren umfasst:
- dass die bewegliche Maschine (15) von einer Steuereinheit (17) gesteuert wird;
- dass eine Sensorvorrichtung (19) eine 3D-Repräsentation einer Umgebung (27) der beweglichen Maschine (15) ermittelt;
- dass ein initiales Schutzfeld vorgegeben wird, bei dem es sich um einen definierten Raumbereich innerhalb der Umgebung (27) der beweglichen Maschine (15) handelt;
- dass eine erste Anpassungsvorrichtung (23) und eine zweite Anpassungsvorrichtung (25) von der Steuereinheit (17) Zustandsdaten (35) über die bewegliche Maschine (15) empfangen, wobei die erste Anpassungsvorrichtung (23) ausgehend von dem initialen Schutzfeld in Abhängigkeit von den Zustandsdaten (35) ein erstes angepasstes Schutzfeld ermittelt und die zweite Anpassungsvorrichtung (25) ausgehend von dem initialen Schutzfeld in Abhängigkeit von den Zustandsdaten (35) ein zweites angepasstes Schutzfeld ermittelt;
- dass auf Grundlage sowohl des ersten angepassten Schutzfelds als auch des zweiten angepassten Schutzfelds ein maßgebliches Schutzfeld (29) ermittelt wird;
- dass eine Auswertevorrichtung (21) die ermittelte 3D-Repräsentation im Hinblick darauf auswertet, ob ein Objekt in das maßgebliche Schutzfeld (29) eingreift, und in Abhängigkeit von dem Ergebnis der Auswertung ein Ergebnissignal (31) ausgibt; und
- dass die Steuereinheit (17) eine sicherheitsgerichtete Reaktion auslöst, wenn das Ergebnissignal (31) einem Eingreifen eines Objekts in das maßgebliche Schutzfeld (29) entspricht.

2. Verfahren nach Anspruch 1,
wobei das erste angepasste Schutzfeld gemäß einem ersten Algorithmus ermittelt wird und das zweite angepasste Schutzfeld gemäß einem von dem ersten Algorithmus verschiedenen zweiten Algorithmus ermittelt wird.

3. Verfahren nach Anspruch 1 oder 2,
wobei das Ermitteln des maßgeblichen Schutzfelds (29) umfasst, dass das erste angepasste Schutzfeld und das zweite angepasste Schutzfeld räumlich überlagert werden.

4. Verfahren nach einem der vorstehenden Ansprüche,
wobei das maßgebliche Schutzfeld (29) in Form einer maßgeblichen Lookup-Tabelle (33) ermittelt wird, und
wobei das genannte Auswerten umfasst, dass die ermittelte 3D-Repräsentation mit der maßgeblichen Lookup-Tabelle (33) verglichen wird.

5. Verfahren nach Anspruch 4,
wobei das erste angepasste Schutzfeld in Form einer ersten Lookup-Tabelle (37) ermittelt wird,
wobei das zweite angepasste Schutzfeld in Form einer zweiten Lookup-Tabelle ermittelt wird, und
wobei das Ermitteln des maßgeblichen Schutzfelds (29) umfasst:
- dass durch Unterabtastung der ersten Lookup-Tabelle (37) gemäß einem vorgegebenen Abtastmuster (43) eine erste Teil-Lookup-Tabelle (39) gebildet wird;
- dass durch Unterabtastung der zweiten Lookup-Tabelle gemäß dem Inversen des vorgegebenen Abtastmusters (43) eine zweite Teil-Lookup-Tabelle (41) gebildet wird; und
- dass die maßgebliche Lookup-Tabelle (33) durch Kombination der ersten Teil-Lookup-Tabelle (39) mit der zweiten Teil-Lookup-Tabelle (41) gebildet wird.

6. Verfahren nach Anspruch 5,
wobei durch die Unterabtastung jeweils zumindest im Wesentlichen die Hälfte der Felder der jeweiligen Lookup-Tabelle verworfen wird.

7. Verfahren nach Anspruch 5 oder 6,
wobei in dem Abtastmuster (43) Bereiche, die bei der Unterabtastung beibehalten werden, und Bereiche, die bei der Unterabtastung verworfen werden, homogen verteilt sind.

8. Verfahren nach einem der Ansprüche 5 bis 7,
wobei sich in dem Abtastmuster (43) Bereiche, die bei der Unterabtastung beibehalten werden, und Bereiche, die bei der Unterabtastung verworfen werden, regelmäßig abwechseln.

9. Verfahren nach einem der Ansprüche 5 bis 8,
wobei das Abtastmuster (43) ein Schachbrettmuster ist.

10. Verfahren nach einem der vorstehenden Ansprüche,
wobei das Verfahren ferner umfasst,
- dass für das maßgebliche Schutzfeld (29) ein Stetigkeitskriterium geprüft wird; und
- dass, wenn das Stetigkeitskriterium nicht erfüllt ist, ein Warnhinweis an einen Nutzer der beweglichen Maschine (15) ausgegeben wird.

11. Sicherheitseinrichtung (11) zum sicheren Betrieb einer beweglichen Maschine (15),
wobei die Sicherheitseinrichtung (11) eine Sensorvorrichtung (19), eine Auswertevorrichtung (21) sowie eine erste Anpassungsvorrichtung (23) und eine zweite Anpassungsvorrichtung (25) umfasst,
wobei die Sensorvorrichtung (19) dazu ausgebildet ist, eine 3D-Repräsentation einer Umgebung (27) der beweglichen Maschine (15) zu ermitteln,
wobei die erste Anpassungsvorrichtung (23) dazu ausgebildet ist, Zustandsdaten (35) über die bewegliche Maschine (15) zu empfangen und ausgehend von einem vorgegebenen initialen Schutzfeld in Abhängigkeit von den Zustandsdaten (35) ein erstes angepasstes Schutzfeld zu ermitteln,
wobei die zweite Anpassungsvorrichtung (25) dazu ausgebildet ist, Zustandsdaten (35) über die bewegliche Maschine zu empfangen und ausgehend von dem vorgegebenen initialen Schutzfeld in Abhängigkeit von den Zustandsdaten (35) ein zweites angepasstes Schutzfeld zu ermitteln, und wobei die Auswertevorrichtung (21) dazu ausgebildet ist, die ermittelte 3D-Repräsentation im Hinblick darauf auszuwerten, ob ein Objekt in ein auf Grundlage sowohl des ersten angepassten Schutzfelds als auch des zweiten angepassten Schutzfelds ermitteltes maßgebliches Schutzfeld (29) eingreift, und in Abhängigkeit von dem Ergebnis der Auswertung ein Ergebnissignal (31) auszugeben.

12. Sicherheitseinrichtung nach Anspruch 11,
wobei die Auswertevorrichtung (21) in die Sensorvorrichtung (19) integriert ist.

13. Sicherheitseinrichtung nach Anspruch 11 oder 12,
wobei die erste Anpassungsvorrichtung (23) und die zweite Anpassungsvorrichtung (25) von der Sensorvorrichtung (19) und der Auswertevorrichtung (21) separat ausgebildet sind.

14. Maschineneinrichtung (13), die eine bewegliche Maschine (15), eine Steuereinheit (17) zur Steuerung der beweglichen Maschine (15) sowie eine Sicherheitseinrichtung (11) nach einem der Ansprüche 11 bis 13 umfasst, wobei die Steuereinheit (17) dazu ausgebildet ist, das Ergebnissignal (31) von der Auswertevorrichtung (21) zu empfangen und eine sicherheitsgerichtete Reaktion auszulösen, wenn das Ergebnissignal (21) einem Eingreifen eines Objekts in das maßgebliche Schutzfeld (29) entspricht.

15. Maschineneinrichtung nach Anspruch 14, die dazu ausgebildet ist, ein Verfahren nach einem der Ansprüche 1 bis 10 auszuführen.

## Claims

1. A method for the safe operation of a movable machine (15),
wherein the method comprises:
- that the movable machine (15) is controlled by a control unit (17);
- that a sensor apparatus (19) determines a 3D representation of an environment (27) of the movable machine (15);
- that an initial protective field is predefined that is a defined spatial zone within the environment (27) of the movable machine (15);
- that a first adaptation apparatus (23) and a second adaptation apparatus (25) receive status data (35) regarding the movable machine (15) from the control unit (17), wherein the first adaptation apparatus (23) determines a first adapted protective field based on the initial protective field and in dependence on the status data (35), and the second adaptation apparatus (25) determines a second adapted protective field based on the initial protective field and in dependence on the status data (35);
- that a relevant protective field (29) is determined on the basis of both the first adapted protective field and the second adapted protective field;
- that an evaluation apparatus (21) evaluates the determined 3D representation as to whether an object intrudes into the relevant protective field (29) and outputs a result signal (31) in dependence on the result of the evaluation; and
- that the control unit (17) triggers a safety-related response if the result signal (31) corresponds to an intrusion of an object into the relevant protective field (29).

2. A method according to claim 1,
wherein the first adapted protective field is determined in accordance with a first algorithm and the second adapted protective field is determined in accordance with a second algorithm which is different from the first algorithm.

3. A method according to claim 1 or 2,
wherein the determination of the relevant protective field (29) comprises spatially superimposing the first adapted protective field and the second adapted protective field.

4. A method according to any one of the preceding claims,
wherein the relevant protective field (29) is determined in the form of a relevant lookup table (33), and
wherein said evaluation comprises comparing the determined 3D representation with the relevant lookup table (33).

5. A method according to claim 4,
wherein the first adapted protective field is determined in the form of a first lookup table (37),
wherein the second adapted protective field is determined in the form of a second lookup table, and
wherein the determination of the relevant protective field (29) comprises:
- that a first partial lookup table (39) is formed by subsampling the first lookup table (37) in accordance with a predefined sampling pattern (43);
- that a second partial lookup table (41) is formed by subsampling the second lookup table in accordance with the inverse of the predefined sampling pattern (43); and
- that the relevant lookup table (33) is formed by combining the first partial lookup table (39) with the second partial lookup table (41).

6. A method according to claim 5,
wherein at least substantially half of the fields of the respective lookup table are discarded in each case by the subsampling.

7. A method according to claim 5 or 6,
wherein, in the sampling pattern (43), regions which are retained during the subsampling and regions which are discarded during the subsampling are distributed homogeneously.

8. A method according to any one of the claims 5 to 7,
wherein, in the sampling pattern (43), regions which are retained during the subsampling and regions which are discarded during the subsampling alternate regularly.

9. A method according to any one of the claims 5 to 8,
wherein the sampling pattern (43) is a checkerboard pattern.

10. A method according to any one of the preceding claims,
wherein the method further comprises
- that a continuity criterion is checked for the relevant protective field (29); and
- that, if the continuity criterion is not met, a warning notice is issued to a user of the movable machine (15).

11. A safety device (11) for the safe operation of a movable machine (15),
wherein the safety device (11) comprises a sensor apparatus (19), an evaluation apparatus (21) as well as a first adaptation apparatus (23) and a second adaptation apparatus (25),
wherein the sensor apparatus (19) is configured to determine a 3D representation of an environment (27) of the movable machine (15),
wherein the first adaptation apparatus (23) is configured to receive status data (35) regarding the movable machine (15) and to determine a first adapted protective field based on a predefined initial protective field and in dependence on the status data (35),
wherein the second adaptation apparatus (25) is configured to receive status data (35) regarding the movable machine and to determine a second adapted protective field based on the predefined initial protective field and in dependence on the status data (35), and
wherein the evaluation apparatus (21) is configured to evaluate the determined 3D representation as to whether an object intrudes into a relevant protective field (29) determined on the basis of both the first adapted protective field and the second adapted protective field, and to output a result signal (31) in dependence on the result of the evaluation.

12. A safety device according to claim 11,
wherein the evaluation apparatus (21) is integrated into the sensor apparatus (19).

13. A safety device according to claim 11 or 12,
wherein the first adaptation apparatus (23) and the second adaptation apparatus (25) are formed separately from the sensor apparatus (19) and the evaluation apparatus (21).

14. A machine device (13) which comprises a movable machine (15), a control unit (17) for controlling the movable machine (15) and a safety device (11) according to any one of claims 11 to 13,
wherein the control unit (17) is configured to receive the result signal (31) from the evaluation apparatus (21) and to trigger a safety-related response if the result signal (31) corresponds to an intrusion of an object into the relevant protective field (29).

15. A machine device according to claim 14, which is configured to perform a method according to any one of the claims 1 to 10.

## Revendications

1. Procédé pour assurer le fonctionnement en toute sécurité d'une machine mobile (15),
ledit procédé comprenant :
- la commande de la machine mobile (15) par une unité de commande (17) ;
- qu'un dispositif capteur (19) détermine une représentation 3D d'un environnement (27) de la machine mobile (15) ;
- qu'un champ de protection initial est prédéfini, lequel correspond à une zone spatiale définie à l'intérieur de l'environnement (27) de la machine mobile (15) ;
- qu'un premier dispositif d'adaptation (23) et un deuxième dispositif d'adaptation (25) reçoivent de l'unité de commande (17) des données d'état (35) concernant la machine mobile (15), le premier dispositif d'adaptation (23) déterminant, à partir du champ de protection initial et en fonction des données d'état (35) et le deuxième dispositif d'adaptation (25) détermine, à partir du champ de protection initial et en fonction des données d'état (35), un deuxième champ de protection adapté ;
- qu'un champ de protection déterminant (29) est déterminé sur la base à la fois du premier champ de protection adapté et du deuxième champ de protection adapté ;
- qu'un dispositif d'évaluation (21) évalue la représentation 3D déterminée afin de déterminer si un objet empiète sur le champ de protection déterminant (29) et émet un signal de résultat (31) en fonction du résultat de l'évaluation ; et
- que l'unité de commande (17) déclenche une réaction de sécurité lorsque le signal de résultat (31) correspond à l'intrusion d'un objet dans le champ de protection déterminant (29).

2. Procédé selon la revendication 1,
dans lequel le premier champ de protection adapté est déterminé selon un premier algorithme et le deuxième champ de protection adapté est déterminé selon un deuxième algorithme différent du premier algorithme.

3. Procédé selon la revendication 1 ou 2,
la détermination du champ de protection pertinent (29) consistant à superposer spatialement le premier champ de protection adapté et le deuxième champ de protection adapté.

4. Procédé selon l'une des revendications précédentes,
dans lequel le champ de protection déterminant (29) est déterminé sous la forme d'une table de consultation déterminante (33), et
dans lequel ladite évaluation comprend la comparaison de la représentation 3D déterminée avec la table de consultation déterminante (33).

5. Procédé selon la revendication 4,
dans lequel le premier champ de protection adapté est déterminé sous la forme d'une première table de consultation (37),
le deuxième champ de protection adapté étant déterminé sous la forme d'une deuxième table de consultation, et
la détermination du champ de protection pertinent (29) comprenant :
- la formation d'une première table de consultation partielle (39) par sous-échantillonnage de la première table de consultation (37) selon un modèle d'échantillonnage prédéfini (43) ;
- la formation d'une deuxième table de consultation partielle (41) par sous-échantillonnage de la deuxième table de consultation selon l'inverse du modèle d'échantillonnage prédéfini (43) ; et
- que la table de consultation déterminante (33) est formée par la combinaison de la première table de consultation partielle (39) avec la deuxième table de consultation partielle (41).

6. Procédé selon la revendication 5,
dans lequel le sous-échantillonnage rejette à chaque fois au moins sensiblement la moitié des champs de la table de consultation respective.

7. Procédé selon la revendication 5 ou 6,
dans lequel, dans le motif de balayage (43), les zones conservées lors du sous-échantillonnage et les zones rejetées lors du sous-échantillonnage sont réparties de manière homogène.

8. Procédé selon l'une des revendications 5 à 7,
dans lequel, dans le motif de balayage (43), les zones conservées lors du sous-échantillonnage et les zones rejetées lors du sous-échantillonnage alternent régulièrement.

9. Procédé selon l'une des revendications 5 à 8,
dans lequel le motif de balayage (43) est un motif en damier.

10. Procédé selon l'une des revendications précédentes,
le procédé comprenant en outre
- la vérification d'un critère de continuité pour le champ de protection pertinent (29) ; et
- que, si le critère de continuité n'est pas rempli, un message d'avertissement est émis à l'intention d'un utilisateur de la machine mobile (15).

11. Dispositif de sécurité (11) destiné à assurer le fonctionnement en toute sécurité d'une machine mobile (15),
le dispositif de sécurité (11) comprenant un dispositif capteur (19), un dispositif d'évaluation (21) ainsi qu'un premier dispositif d'adaptation (23) et un deuxième dispositif d'adaptation (25),
le dispositif capteur (19) étant conçu pour déterminer une représentation 3D d'un environnement (27) de la machine mobile (15),
le premier dispositif d'adaptation (23) étant conçu pour recevoir des données d'état (35) concernant la machine mobile (15) et pour déterminer, à partir d'un champ de protection initial prédéfini et en fonction des données d'état (35), un premier champ de protection adapté,
le deuxième dispositif d'adaptation (25) étant conçu pour recevoir des données d'état (35) concernant la machine mobile et pour déterminer, à partir du champ de protection initial prédéfini et en fonction des données d'état (35), un deuxième champ de protection adapté, et
le dispositif d'évaluation (21) étant conçu pour évaluer la représentation 3D déterminée afin de déterminer si un objet empiète sur un champ de protection déterminant (29) établi sur la base à la fois du premier champ de protection adapté et du deuxième champ de protection adapté, et à émettre un signal de résultat (31) en fonction du résultat de l'évaluation.

12. Dispositif de sécurité selon la revendication 11,
le dispositif d'évaluation (21) étant intégré au dispositif capteur (19).

13. Dispositif de sécurité selon la revendication 11 ou 12,
dans lequel le premier dispositif d'adaptation (23) et le deuxième dispositif d'adaptation (25) sont formés séparément du dispositif capteur (19) et du dispositif d'évaluation (21).

14. Dispositif de machine (13) comprenant une machine mobile (15), une unité de commande (17) pour commander la machine mobile (15) ainsi qu'un dispositif de sécurité (11) selon l'une des revendications 11 à 13,
l'unité de commande (17) étant conçue pour recevoir le signal de résultat (31) provenant du dispositif d'évaluation (21) et pour déclencher une réaction de sécurité lorsque le signal de résultat (31) correspond à l'intrusion d'un objet dans le champ de protection pertinent (29).

15. Dispositif de machine selon la revendication 14, qui est conçu pour exécuter un procédé selon l'une des revendications 1 à 10.
